# EUROPEAN PATENT SPECIFICATION

(11) **EP 1 151 191 B1**
(45) Date of publication and mention of the grant of the patent: **22.12.2004**
(21) Application number: 00901368.1
(22) Date of filing: 12.01.2000
(51) Int. Cl.: F02M 55/02, F02M 35/104

(54) **ARRANGEMENT FOR INTERNAL COMBUSTION ENGINES**
VORRICHTUNG FÜR BRENNKRAFTMASCHINEN
AGENCEMENT POUR MOTEURS A COMBUSTION INTERNE

(30) Priority: 12.01.1999 SE 9900049
(43) Date of publication of application: 07.11.2001
(73) Proprietor: Volvo Personvagnar AB, 405 31 Göteborg (SE)
(72) Inventor: FREDRIKSSON, Göran, S-413 13 Göteborg (SE); JÖNSSON, Mikael, S-439 94 Onsala (SE)
(74) Representative: Bergquist, Kjell Gunnar
(86) International application number: PCT/SE2000/000031
(87) International publication number: WO 2000/042314

(56) References cited:
- WO-A-88/02067
- US-A- 4 909 221
- US-A- 5 357 931
- US-A- 5 394 850
- US-A- 5 771 863

## Description

### TECHNICAL FIELD

The present invention relates to an arrangement for internal combustion engines of the piston engine type having at least one row of cylinders, the arrangement comprising at least one fuel injector for each cylinder and at least one intake manifold for admission of air to the cylinders.

### PRIOR ART

Modem cars with internal combustion engines are almost all provided with an Otto engine or diesel engine. Otto engines, which by and large are always intended for petrol, are provided with injectors for the fuel, in contrast to older engines which have carburettors. This development has come about largely because the requirements regarding exhaust gas have become more stringent over the years. An engine type which has become more common in recent times is one which has injectors injecting the fuel directly into the cylinder, so-called direct injection, since this permits so-called lean running. In this connection, a construction-related problem lies in finding room on the cylinder head of the engine for the injectors and their admission lines together with intake manifolds and other lines arranged around the cylinder head. The intake manifolds of course take up quite a lot of room themselves, with perhaps several ports per cylinder, EGR inlets, valves, and pipes with selectable airways. In this context, use is if often made of a fuel pipe system comprising a feed pipe to the side of the engine and narrow lines from the feed pipe to the injectors. These are relatively costly constructions since the demands on compactness and strength in this environment are high. Direct injection is also found on diesel engines, which thus have similar problems.

### DESCRIPTION OF THE INVENTION

The present invention proposes a solution to the above problems with the arrangement according to claim 1. The invention is based on the fact that the inlets of the fuel injectors are connected to a fuel channel arranged in the intake manifold. The fuel channel is advantageously integrated in the intake manifold construction, and the inlets of the injectors are preferably connected to openings adapted for them in the intake manifold.

A particularly advantageous embodiment is characterized in that the intake manifold is divided into two parts, of which a first part accommodates the fuel channel and the attachments to the fuel injectors, and a second part constitutes the rest of the intake system with, inter alia, the so-called pipes. At its end facing away from the engine, the intake manifold can be designed with an attachment to an air-cleaning system or the like. One advantage of having an intake manifold which is divided in two is that the first part which is coupled to the fuel injectors, with the demands that have to be placed on, among other things, leaktightness and thus surface fineness in the openings where the injectors are attached, can be made of a material well suited for the special material treatment which is needed, while the other part can be made of a material with lower requirements, i.e. a less expensive material. The handling of the work pieces during material treatment is also made easier by the fact that the part which is treated is smaller than a complete intake manifold, e.g. if the material is to be treated in a furnace. It is also expedient to accommodate in the first part valves for swirl effect, since assembly is simpler.

### DESCRIPTION OF THE FIGURES

The invention will be described and explained below with reference to the figures shown in the attached drawings, in which:
Fig. 1 shows a cylinder head of an engine according to the invention, with attached fuel injectors,
Fig. 2 shows a first intake manifold part from the side intended to be connected to the intake side of the cylinder head and the fuel injectors,
Fig. 3 shows the same cylinder head as in Figure 1, with an attached first portion of an intake manifold according to Fig. 2,
Fig. 4 shows a section through a fuel injector and its connection to a fuel channel in the intake manifold, and
Fig. 5 again shows the same cylinder head as in Figures 1 and 3, but with a complete intake manifold according to the invention fitted on it.

### PREFERRED EMBODIMENT

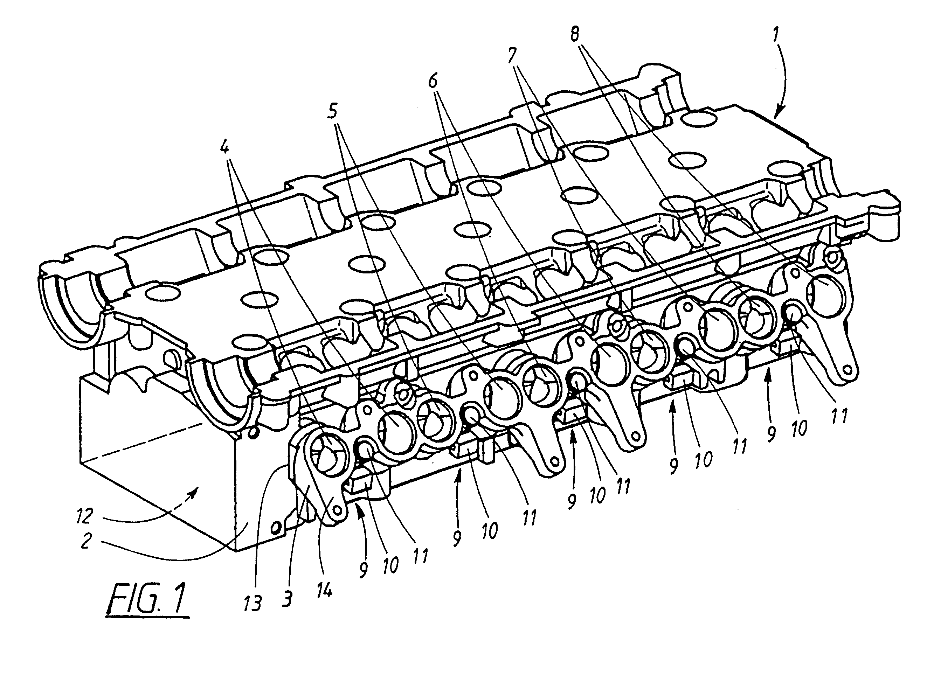

Figure 1 is a diagrammatic representation of a conventional cylinder head I intended for a now customary double overhead camshaft. The valve cap, the camshafts, the valve mechanisms and their associated bearings and bearing covers have been omitted since they do not pertain to the invention.

The cylinder head shown is intended for an engine with five cylinders. Each cylinder has two inlet ports for air (concealed in the figure) which are connected to an adapter part 3 which belongs to the intake manifold construction and extends along the side 2 of the cylinder head, and which part 3 has inlet channels 4, 5, 6, 7 and 8 which are connected in pairs to the inlet ports of the engine. A fuel injector 9 is mounted between the channels in each pair of inlet channels, in other words a total of five fuel injectors. The fuel injectors 9, which are of a known type available on the market, have an electrical connection 10 for a control signal and a circular-cylindrical fuel inlet 11. Depending on the desired injection angle in the cylinder, the fuel injectors and their inlets 11 have a direction which is angled in relation to the cylinder head's connection plane to the engine and the main axis of the engine cylinders. On the cylinder head shown in the figure, the said connection plane faces downwards and is indicated by an arrow labelled 12.

Along the engine, the adapter part 3 is designed with first and second connection planes 13 and 14. The first plane 13 is connected to a corresponding plane on the side 2 of the cylinder head 1 so that the cylinder inlet ports opening out in the side of the cylinder head connect to and continue in the inlet channels 4-8. The second connection plane 14 is arranged at an angle to the first connection plane 13 such that the connection plane 14 lies at right angles to the direction of the fuel inlet 11.

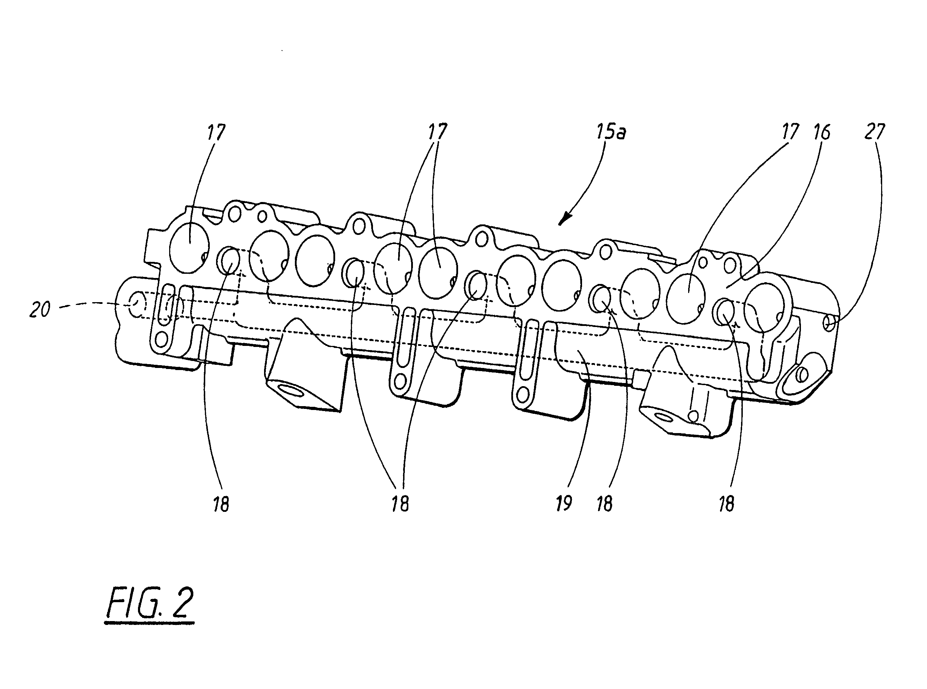

Figure 2 illustrates a first, inner part 15a of an intake manifold 15 whose side 16 shown in the figure has ten inlet openings 17 and five fuel holes 18 corresponding to the inlet channels 4-8 of the second connection plane 14 and the fuel inlets 11 of the injectors 9. The fuel holes 18 are in direct communication with a fuel channel 19 (shown diagrammatically) which is integrated in the part 15a and which in turn receives fuel from a feed line (not shown) via a fuel inlet 20.

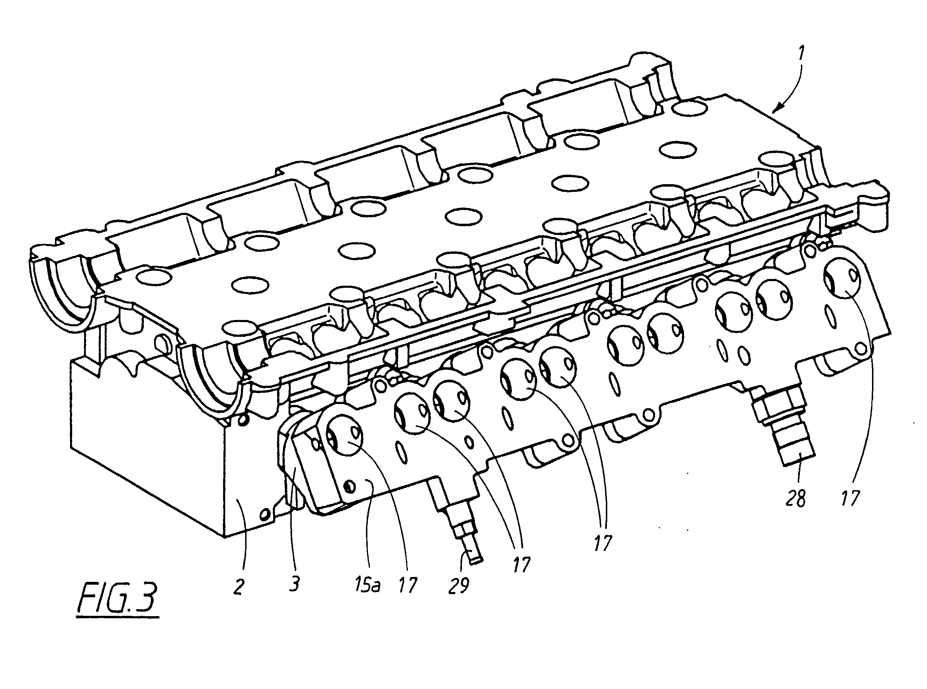

Figure 3 shows the first part 15a of the intake manifold 15 mounted on the adapter 3. The inlet openings 17 are arranged in such a way that they have a direct continuation in the inlet channels 4-8. On that side of the intake manifold part 15a directed towards and connected to the adapter part 3, the fuel inlets 11 of the fuel injectors 9 are connected to corresponding fuel holes 18 in the part 15a. By virtue of the fact that the connection plane 14 is at right angles to the direction of the fuel inlets 11 on the injectors 9, there is no uneven loading of the injectors 9 from the intake manifold 15a. Normally, the injectors 9 are secured to the cylinder head 1 by bolts in a known manner, but it is also possible for them to be held secure only by means of the intake manifold 15a lying on the outside via support surfaces (not shown) which are arranged on the bottom of the fuel holes 18 and which bear against the fuel inlets 11 of the injectors. A pressure sensor 28 and a safety valve 29 for the fuel are also connected to the part 15a.

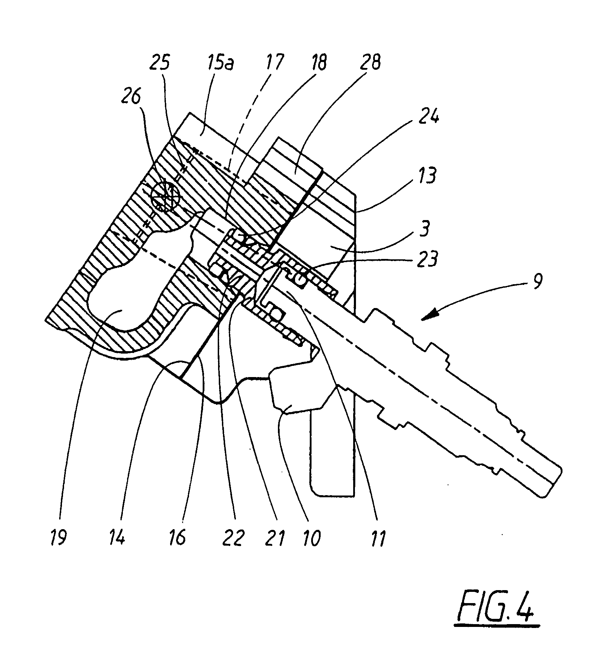

Figure 4 shows a section through a fuel injector 9 and its attachment to an intake manifold part 15a. An extension part 21 with a portion 22 inserted into a fuel hole 18 is connected coaxially to the fuel inlets 11 of the injectors. Arranged between the extension part 21 and the outside of the inlet 11 of the fuel injector, and between the portion 22 of the extension part and the inside of the fuel hole of the intake manifold part 15a, there are sealing rings 23 and 24, respectively. This construction affords a tolerance-absorbing effect between the inlets 11 of the fuel injectors and the fuel holes 18 in the intake manifold 15a. The figure also shows an inlet port 17, indicated by broken lines. A so-called swirl valve 25 is shown diagrammatically in the port 17, which swirl valve 25 can be controlled in a known manner via a diagrammatically represented control rod 26 in a rod hole 27. Swirl valves are arranged in one of the two inlet ports 17 belonging to each cylinder. A bolt hole 28 for attachment of the adapter part 3 is also shown.

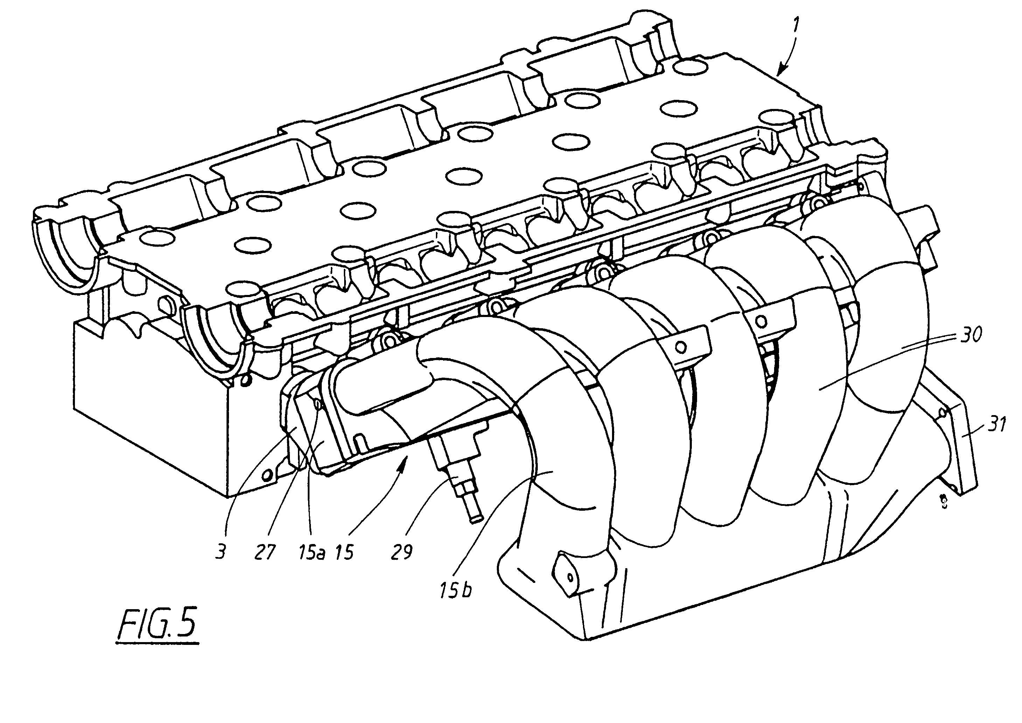

The intake manifold is completed in Figure 5 by an outer part 15b which comprises pipes 30, one pair for each cylinder, and a connection 31 to the air supply system, valve housing and similar components normally belonging to a car engine.

The part 15a of the intake manifold 15 connected to the fuel injectors must, in the fuel holes connected to the inlets 11 of the fuel injectors, have a surface fineness which ensures that no leakage occurs. It is also important that the walls in the intake manifold withstand the fuel pressure while at the same time being as thin as possible in order to take up the least possible space and have the lowest possible weight. A suitable material for the pipe is aluminium, which can be chilled-cast. So-called thixo casting can also be used, and so-called HIPping to have the pores pressed together. In such treatment methods, it is a great advantage that the work pieces are not unnecessarily large and unwieldy. In addition, a less expensive material can be chosen for the part 15b, which does not need to meet such stringent specifications.

The invention is not limited to the illustrative embodiment described and explained above, and instead many variants are possible within the scope of the attached patent claims. In its simplest variant, for example, the intake manifold can be integrated in a single piece comprising the adapter 3, the part 15a and the part 15b, in a design with the fuel holes 18 arranged directly on the inlets 11 of the fuel injectors. It is also possible to integrate only the adapter part 3 and the inner part 15a, and it is likewise possible for the adapter part to be integrated in the cylinder head, i.e. the cylinder head is designed with a connection plane 2 at right angles to the direction of the inlets of the fuel injectors.

## Claims

1. Arrangement for internal combustion engines of the multi-cylinder piston engine type having at least one row of cylinders, comprising at least one fuel injector (9) for each cylinder and at least one intake manifold (15a, 15b) for admission of air to the cylinders, whereby the fuel channel (19) is integral with the intake manifold (15a) **characterized in that** the fuel injectors (9) are mounted at the cylinder head, between the head and the intake manifold, and that the inlets (11) of the fuel injectors (9) are connected to the fuel channel (19) arranged in the intake manifold (15a).

2. Arrangement according to any of the preceding claims,
**characterized in that** the intake manifold (15a, 15b) has a first, inner part (15a) located nearest to the engine, accommodating the fuel channel (19) and connected to the fuel injectors (9) and the engine intake ports (4-8), and a second, outer part (15b) which is connected to the first part and has intake pipes (30) and a connection (31) to an air-cleaning system.

3. Arrangement according to either of the preceding claims,
**characterized in that** the fuel inlets (11) of the fuel injectors (9) are connected via an extension part (21) to the channel (19) arranged in the intake manifold (15a).

4. Arrangement according to claim 2 or according to claims 2 and 3, **characterized in that** the first part (15a) accommodates valves (25) for controlling the so-called swirl effect.

5. Arrangement according to any of the preceding claims,
**characterized in that** the fuel injectors (9) are held securely in the cylinder head (1) by the intake manifold (15a).

6. Arrangement according to any of the preceding claims,
**characterized in that** the surface of the cylinder head (1) connecting to the intake manifold is at right angles to the direction of the fuel inlets (11) of the fuel injectors (9).

7. Car engine, **characterized in that** it comprises an arrangement according to any of the preceding claims.

8. Car, **characterized in that** it comprises a car engine having an arrangement according to any of the preceding claims.

## Patentansprüche

1. Anordnung für Brennkraftmaschinen nach Art einer Mehrzylinderkolbenmaschine mit wenigstens einer Reihe von Zylindern, mit wenigstens einer Kraftstoffeinspritzeinrichtung (9) für jeden Zylinder und wenigstens einem Einlasskrümmer (15a, 15b) für den Zugang von Luft zu den Zylindem, wobei der Kraftstoffkanal (19) einstückig mit dem Einlasskrümmer (15a) gebildet ist, **dadurch gekennzeichnet, dass** die Kraftstoffeinspritzeinrichtungen (9) an dem Zylinderkopf zwischen dem Kopf und dem Einlasskrümmer montiert sind, und dass die Einlässe (11) der Kraftstoffeinspritzeinrichtungen (9) mit dem Kraftstoffkanal (19) verbunden sind, der in dem Einlasskrümmer (15a) angeordnet ist.

2. Anordnung nach einem der vorangehenden Ansprüche, **dadurch gekennzeichnet, dass** der Einlasskrümmer (15a, 15b) einen ersten inneren Abschnitt (15a), der nächstliegend zu der Maschine angeordnet ist, der den Kraftstoffkanal (19) aufnimmt und der mit den Kraftstoffeinspritzeinrichtungen (9) und den Maschineneinlassöffnungen (4 - 8) verbunden ist, und einen zweiten äußeren Abschnitt (15b) aufweist, der mit dem ersten Abschnitt verbunden ist und Einlassrohre (30) und eine Verbindung (31) zu einem Luftreinigungssystem aufweist.

3. Anordnung nach einem der vorangehenden Ansprüche, **dadurch gekennzeichnet, dass** die Kraftstoffeinlässe (11) der Kraftstoffeinspritzeinrichtungen (9) über einen Verlängerungsabschnitt (21) mit dem Kanal (19), der in dem Einlasskrümmer (15a) angeordnet ist, verbunden sind.

4. Anordnung nach Anspruch 2 oder nach Anspruch 2 und 3, **dadurch gekennzeichnet, dass** der erste Abschnitt (15a) Ventile (25) zur Steuerung des so genannten Wirbeleffekts aufnimmt.

5. Anordnung nach einem der vorangehenden Ansprüche, **dadurch gekennzeichnet, dass** die Kraftstoffeinspritzeinrichtungen (9) fest in dem Zylinderkopf (1) mittels des Einlasskrümmers (15a) gehalten sind.

6. Anordnung nach einem der vorangehenden Ansprüche, **dadurch gekennzeichnet, dass** die Oberfläche des Zylinderkopfs (1), die mit dem Einlasskrümmer verbunden ist, in rechten Winkeln zu der Richtung der Kraftstoffeinlässe (11) der Kraftstoffeinspritzeinrichtungen (9) angeordnet ist.

7. Kraftfahrzeugmotor, **dadurch gekennzeichnet, dass** er eine Anordnung nach einem der vorangehenden Ansprüche aufweist.

8. Kraftfahrzeug, **dadurch gekennzeichnet, dass** es einen Kraftfahrzeugmotor aufweist, der eine Anordnung gemäß einem der vorangehenden Ansprüche aufweist.

## Revendications

1. Agencement pour moteur à combustion interne du type moteur à pistons à plusieurs cylindres ayant au moins une rangée de cylindres, comprenant au moins un injecteur de carburant (9) pour chaque cylindre et au moins un collecteur d'admission (15a, 15b) pour l'admission d'air aux cylindres, dans lequel le canal à carburant (19) est intégral avec le collecteur d'admission (15a), **caractérisé en ce que** les injecteurs de carburant (9) sont montés au niveau de la tête de cylindres, entre la tête et le collecteur d'admission, et **en ce que** les entrées (11) des injecteurs de carburant (9) sont connectées au canal à carburant (19) agencé dans le collecteur d'admission (15a).

2. Agencement selon l'une quelconque des revendications précédentes, **caractérisé en ce que** le collecteur d'admission (15a, 15b) comprend une première partie intérieure (15a) située la plus proche du moteur, qui loge le canal à carburant (19) et qui est connectée aux injecteurs de carburant (9) et aux orifices d'admission (4-8) du moteur, et une seconde partie extérieure (15b) qui est connectée à la première partie et qui comprend des pipes d'admission (30) et une connexion (31) à un système de purification d'air.

3. Agencement selon l'une ou l'autre des revendications précédentes, **caractérisé en ce que** les entrées de carburant (11) des injecteurs de carburant (9) sont connectées via une partie d'extension (21) au canal (19) agencé dans le collecteur d'admission (15a).

4. Agencement selon la revendication 2, ou selon les revendications 2 et 3, **caractérisé en ce que** la première partie (15a) loge des clapets (25) pour contrôler l'effet dit de tourbillonnement.

5. Agencement selon l'une quelconque des revendications précédentes, **caractérisé en ce que** les injecteurs de carburant (9) sont maintenus de façon assurée dans la tête de cylindres (1) par le collecteur d'admission (15a).

6. Agencement selon l'une quelconque des revendications précédentes, **caractérisé en ce que** la surface de la tête de cylindres (1) connectée au collecteur d'admission est disposée à angle droit par rapport à la direction des entrées de carburant (11) des injecteurs de carburant (9).

7. Moteur d'automobile, **caractérisé en ce qu'**il comprend un agencement selon l'une quelconque des revendications précédentes.

8. Automobile, **caractérisée en ce qu'**elle comprend un moteur ayant un agencement selon l'une quelconque des revendications précédentes.
